# EUROPÄISCHE PATENTSCHRIFT

(11) **EP 2 714 488 B1**
(45) Veröffentlichungstag und Bekanntmachung des Hinweises auf die Patenterteilung: **06.05.2015**
(21) Anmeldenummer: 12721696.8
(22) Anmeldetag: 18.04.2012
(51) Int. Cl.: B62D 1/16, B62D 1/19, B62D 5/00, B62D 5/04, B62D 7/22, B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 27.05.2011 DE 102011050683
(43) Veröffentlichungstag der Anmeldung: 09.04.2014
(73) Patentinhaber: ThyssenKrupp Presta Aktiengesellschaft, 9492 Eschen (LI)
(72) Erfinder: HUBER, Sebastian, A-6811 Göfis (AT)
(74) Vertreter: Fechner, Thomas
(86) Internationale Anmeldenummer: PCT/AT2012/000106
(87) Internationale Veröffentlichungsnummer: WO 2012/162708

(56) Entgegenhaltungen:
- DE-A1-102010 006 069
- GB-A- 2 170 157

## Beschreibung

Die vorliegende Erfindung betrifft eine Lenksäule für ein Kraftfahrzeug mit einer drehbar gelagerten Lenkspindel und einer motorischen Lenkunterstützungseinrichtung zur Lenkwinkelüberlagerung und/oder Drehmomentunterstützung, wobei die Lenkunterstützungseinrichtung mittels zumindest eines Übertragungsgliedes mit der Lenkspindel verbunden ist und die Lenkspindel zumindest zwei drehmomentübertragend miteinander verbundene Lenkspindelteile aufweist, wobei die Lenkspindelteile, in einem Bereich der Lenkspindel zwischen dem Übertragungsglied und einem Lenkradanschluss der Lenkspindel, mittels zumindest eines Dämpfungskörpers zur Dämpfung von über die Lenkspindel übertragenen Vibrationen miteinander verbunden sind.

Lenksäulen mit motorischen Lenkunterstützungseinrichtungen werden im allgemeinen Sprachgebrauch häufig als Servolenkung bezeichnet. Die Lenkunterstützungseinrichtungen können einerseits eine Lenkwinkelüberlagerung durchführen, sprich, einen von Hand über das Lenkrad in die Lenkspindel eingetragenen Lenkwinkel vergrößern oder verkleinern. Motorische Lenkunterstützungseinrichtungen können aber auch zur Drehmomentunterstützung dienen. Häufig wird in diesem Zusammenhang auch von Lenkkraftunterstützung gesprochen. Bei diesen reinen Lenkkraftunterstützungen wird der in die Lenkspindel eingebrachte Lenkwinkel nicht verändert, aber die motorische Lenkunterstützungseinrichtung bringt ein entsprechendes Zusatzdrehmoment auf, damit der Lenker beim Lenken des Fahrzeugs nur geringe Lenkkräfte bzw. -drehmomente aufbringen muss. Es sind beim Stand der Technik auch motorische Lenkunterstützungseinrichtungen bekannt, welche sowohl eine Lenkwinkelüberlagerung als auch eine Drehmomentunterstützung durchführen.

Lenksäulen mit entsprechenden motorischen Lenkunterstützungseinrichtungen sind z. B. aus der WO 2010/109232 A1 und aus der EP 2 177 420 A1 bekannt. Die zweitgenannte europäische Schrift lehrt, Tefloneinlagen mittels Elastomerkörpern so vorzuspannen, dass in einem Übertragungsteil keine Klappergeräusche entstehen können.

Beim Stand der Technik treten aber häufig auch durch den Hilfskraftmotor der motorischen Lenkunterstützungseinrichtung Vibrationen auf, die über die Lenkspindel auf das Lenkrad übertragen werden. Zur Vermeidung der Übertragung dieser Vibrationen auf das Lenkrad ist beim Stand der Technik aus der DE 36 01 851 C2 eine gattungsgemäße Lösung bekannt. GB 2 170 157 beschreibt eine Lenksäule gemäß dem Oberbegriff des Anspruchs 1. Aufgabe der Erfindung ist es, eine Verbesserung vorzuschlagen, die bei gattungsgemäßen Lenksäulen ein teleskopartiges Zusammenschieben der Lenksäule ermöglicht.

Erfindungsgemäß wird dies durch eine Lenksäule gemäß Patentanspruch 1 gelöst.

Es ist somit vorgesehen, dass zumindest eines der Lenkspindelteile in einer Manteleinheit der Lenksäule drehbar gelagert ist und im Dämpfungskörper ein Hohlraum ausgebildet ist, in den die Manteleinheit, bei einer crashbedingten Verformung und/oder Verschiebung innerhalb der Lenksäule, einschiebbar ist.

Im Bereich zwischen dem Übertragungsglied und dem Lenkradanschluss der Lenkspindel ist ein Dämpfungskörper in die Lenkspindel integriert, welcher die vom Hilfskraftmötor der motorischen Lenkunterstützungseinrichtung erzeugten Vibrationen und Geräusche in der Art dämpft, dass sie nicht bzw. zumindest nicht in einem spürbaren Umfang über die Lenkspindel in den Fahrgastinnenraum des Fahrzeugs übertragen werden können.

Ein Verfahren zum Betrieb einer erfindungsgemäßen Lenksäule kann vorsehen, dass in einem Bereich der Lenkspindel zwischen dem Übertragungsglied und einem Lenkradanschluss der Lenkspindel über die Lenkspindel übertragene Vibrationen mittels des Dämpfungskörpers gedämpft werden.

Um auszuschließen, dass Vibrationen durch physische Verbindungen um den Dämpfungskörper herumgeleitet werden können, sehen bevorzugte Ausgestaltungsformen der Erfindung vor, dass die Lenkspindelteile zumindest im Normalbetrieb der Lenksäule ausschließlich über den Dämpfungskörper, vorzugsweise drehmomentübertragend, miteinander verbunden sind. Dies bedeutet, dass die Lenkspindelteile zumindest im Normalbetrieb abgesehen von ihrer Verbindung über den Dämpfungskörper frei von zusätzlichen Übertragungswegen für Vibrationen miteinander verbunden sind.

Als Dämpfungskörper kommen insbesondere Elastomere in Frage. Es kann dabei vorgesehen sein, dass der gesamte Dämpfungskörper aus einem oder mehreren Elastomeren besteht. Es kann aber auch vorgesehen sein, dass der Dämpfungskörper zumindest ein Elastomer aufweist.

Bevorzugt ist vorgesehen, dass der Dämpfungskörper zusätzlich zu seinen vibrationsdämpfenden Eigenschaften auch der Drehmomentübertragung zwischen den Lenkspindelteilen dient. In diesem Zusammenhang ist es somit günstig, wenn der Dämpfungskörper zumindest im Normalbetrieb der Lenksäule einerseits drehmomentübertragend mit einem der Lenkspindelteile und andererseits drehmomentübertragend mit einem anderen der Lenkspindelteile verbunden ist. Eine entsprechende Verbindung zwischen dem Dämpfungskörper und dem jeweiligen Lenkspindelteil kann durch Verkleben, Vulkanisieren und/oder andere Verbindungsarten wie z.B. Nieten oder Schrauben erfolgen. Günstig ist in diesem Zusammenhang, wenn der Dämpfungskörper gegenüber den benachbart ausgebildeten Bereichen der Lenksäule radial ausgedehnt ausgebildet ist. Dies ermöglicht es relativ hohe Drehmomente über den Dämpfungskörper zu übertragen. Formschlüssige Verbindungen sind ebenfalls zur Drehmomentübertragung geeignet.

Bevorzugte Ausführungsbeispiele der Erfindung sehen vor, dass die Lenkspindelteile mit ihren Drehachsen, um die sie drehbar sind, zumindest in ihren an den Dämpfungskörper angrenzenden Bereichen koaxial zu einander angeordnet sind.

In diesem Zusammenhang wird aber darauf hingewiesen, dass verschiedene Lenkspindelteile auch mittels Kardangelenk miteinander verbunden sein können, wie dies beim Stand der Technik an sich bekannt ist. So kann z.B. ein entsprechendes Kardangelenk in der Lenkspindel zwischen der motorischen Lenkunterstützungseinrichtung und dem Lenkradanschluss der Lenkspindel vorgesehen sein. Es sind aber auch andere Varianten möglich, bei denen ein entsprechendes Kardangelenk im Bereich zwischen der motorischen Lenkunterstützungseinrichtung und einem auf die Lenkstange einwirkenden Lenkgetriebe, also in normaler Fahrtrichtung des Fahrzeugs gesehen, vor der motorischen Lenkunterstützungseinrichtung in die Lenkspindel integriert ist.

Generell sei darauf hingewiesen, dass erfindungsgemäße Lenksäulen sowohl unverstellbar als auch in Höhen- und/oder Längsrichtung verstellbar ausgeführt sein können. Es können auch, beim Stand der Technik bekannte, Energieabsorptionseinrichtungen zur Aufzehrung von Energie in einem Crashfall mit in die Längssäule integriert sein. In diesem Zusammenhang kann die Lenkspindel also somit nicht nur aus zwei Lenkspindelteilen, zwischen denen der Dämpfungskörper angeordnet ist, sondern aus noch zusätzlichen Lenkspindelteilen ausgebildet sein. So können einzelne Lenkspindelteile auch teleskopierbar ineinander angeordnet sein.

Besonders bevorzugte Ausgestaltungsformen erfindungsgemäßer Lenksäulen sehen zur teleskopartigen Ausbildung z.B. für den Crashfall vor, dass zumindest eines der Lenkspindelteile, vorzugsweise beide Lenkspindelteile, einen topfartig ausgebildeten Verbindungsflansch aufweist bzw. aufweisen, wobei der Dämpfungskörper, vorzugsweise jeweils, an dem bzw. den topfartigen Verbindungsflansch(en) befestigt ist. Der weiter vorn erwähnte Hohlraum, in den die Manteleinheit einschiebbar ist bzw. eintauchen kann, kann dann z.B. ein entsprechender Hohlraum in zumindest einem der topfartig ausgebildeten Verbindungsflansche sein. Besonders bevorzugte Ausgestaltungsformen der Erfindung sehen vor, dass die mittels Dämpfungskörper miteinander verbundenen Lenkspindelteile jeweils einen topfartigen Verbindungsflansch aufweisen und der Dämpfungskörper zwischen den topfartigen Verbindungsflanschen, vorzugsweise zwischen zylindermantelförmigen Abschnitten der topfartigen Verbindungsflansche, angeordnet ist. Bei diesen Varianten ist dann günstigerweise vorgesehen, dass einer der topfartigen Verbindungsflansche, vorzugsweise koaxial, zumindest bereichsweise innerhalb des anderen topfartigen Verbindungsflansches angeordnet ist.

Insbesondere bei solchen topfartigen Verbindungsflanschen ist es günstig, wenn der Dämpfungskörper als umlaufende in sich geschlossene Zylindermantelwand ausgebildet ist.

Der Vollständigkeit halber wird darauf hingewiesen, dass unter einem topfartigen Verbindungsflansch insbesondere ein solcher Verbindungsflansch zu verstehen ist, bei dem eine Bodenfläche des Verbindungsflansches von einer Mantelfläche des Verbindungsflansches umgeben ist, wobei Bodenfläche und Mantelfläche zusammen einen nach einer Seite hin offenen Hohlraum im Verbindungsflansch begrenzen. Die Bodenfläche muss dabei nicht zwingend überall eben oder durchgängig ausgebildet sein, sie kann auch Ausnehmungen umfassen. Auch die Mantelfläche kann, aber muss nicht unbedingt zylindermantelartig ausgebildet sein.

Der Vollständigkeit halber wird darauf hingewiesen, dass unter einer motorischen Lenkunterstützungseinrichtung, wie auch beim Stand der Technik bekannt, eine mit zumindest einem Hilfskraftmotor versehene Einrichtung verstanden wird. Diese kann zur Lenkwinkelüberlagerung vorgesehen sein, indem sie einen über das Lenkrad auf die Lenkspindel eingebrachten Drehwinkel mit Hilfe des Hilfskraftmotors verändert, sodass dieser Lenkwinkel in veränderter Weise an das Lenkgetriebe und damit auf die Räder des Fahrzeugs übertragen wird. Die motorische Lenkunterstützungseinrichtung kann aber genau so gut dazu vorgesehen sein, mit einem zusätzlichen Drehmoment die Lenkbewegung des Fahrzeuglenkers zu unterstützen, sodass dieser zum Lenken weniger Kräfte in das Lenkrad einbringen muss. Es kann sich im Zuge der Erfindung darüber hinaus auch um motorische Lenkunterstützungseinrichtungen handeln, die sowohl eine Lenkwinkelüberlagerung als auch eine Drehmomentunterstützung durchführen. Die motorischen Lenkunterstützungseinrichtungen dieser Art sind an sich bekannt und müssen hier nicht noch einmal gesondert geschildert werden. Es sei lediglich darauf hingewiesen, dass es sich bei den Hilfskraftmotoren sowohl um elektrische als auch um hydraulische oder pneumatische oder sonstige beim Stand der Technik bekannte Motoren handeln kann.

Die Lenkspindel wird in der Praxis häufig auch als Lenkwelle bezeichnet. Es ist dasjenige drehbar gelagerte Teil der Lenksäule, an welchem auf der einen Seite am Lenkradanschluss der Lenkspindel das Lenkrad oder eine andere Lenkhandhabe befestigt wird und welches auf der anderen Seite mit dem Lenkgetriebe in Verbindung steht, welches die Drehbewegung der Lenkspindel auf die Lenkstange und damit auf die Räder des Fahrzeuges überträgt. Die in der Regel mehrteilig aufgebaute Lenkspindel wird meist durch die Lenkunterstützungseinrichtung hindurchgeführt, wobei der Hilfskraftmotor der Lenkunterstützungseinrichtung über ein an sich bekanntes Übertragungsglied wie z.B. ein Zahnrad oder dergleichen auf die Lenkspindel einwirkt. Das Übertragungsglied ist somit das Verbindungsglied der Lenkunterstützungseinrichtung zur Verbindung mit der Lenkspindel bzw. zum Einwirken auf die Lenkspindel.

Der Vollständigkeit halber wird noch darauf hingewiesen, dass der Dämpfungskörper in bevorzugten Ausgestaltungsformen einteilig, z.B. wie oben bereits genannt, zylindermantelförmig bzw. rohrförmig ausgebildet sein kann. Es ist aber genau so gut möglich, die Lenkspindelteile in erfindungsgemäßer Art und Weise zur Vibrationsdämpfung nicht über einen einzigen sondern über mehrere Dämpfungskörper miteinander zu verbinden. In anderen Worten kann es sich somit auch um einen mehrteiligen Dämpfungskörper handeln.

Weitere Merkmale und Einzelheiten bevorzugter Ausgestaltungsformen der Erfindung werden anhand der Figurenbeschreibung erläutert. Es zeigen:
Fig. 1 eine schematisierte Darstellung zur Erläuterung des allgemeinen Aufbaus einer Lenksäule;
Fig. 2 einen Längsschnitt durch eine erfindungsgemäße Lenksäule in einem ersten Ausführungsbeispiel;
Fig. 3 den vergrößert dargestellten Bereich A aus Fig. 2;
Fig. 4 eine Schnittdarstellung der Schnittebene BB aus Fig. 3;
Fig. 5 eine schematisierte Darstellung eines Dämpfungskörpers;
Fig. 6 einen zu Fig. 2 analogen Längsschnitt durch ein zweites Ausführungsbeispiel der Erfindung;
Fig. 7 den vergrößert dargestellten Ausschnitt C aus Fig. 6;
Fig. 8 eine alternative Ausführungsform des Dämpfungskörpers.

Gleichartige oder gleichwirkende Elemente werden in den Figuren mit denselben Bezugszeichen bezeichnet.

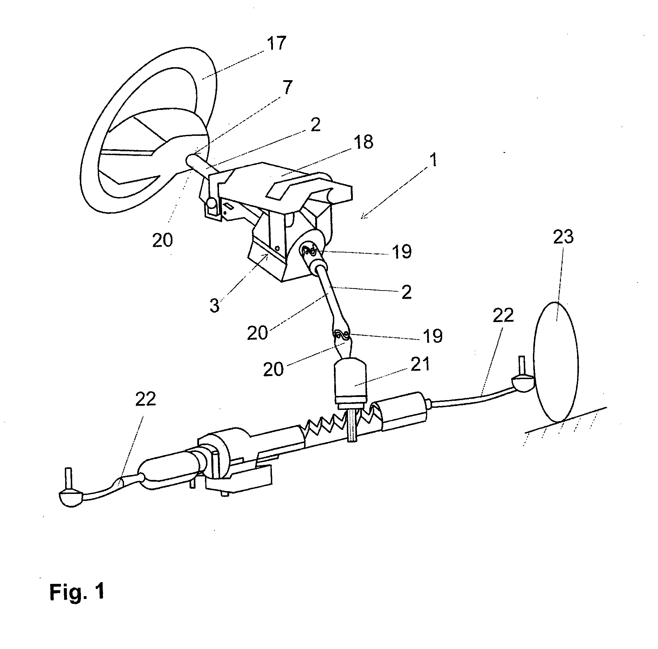

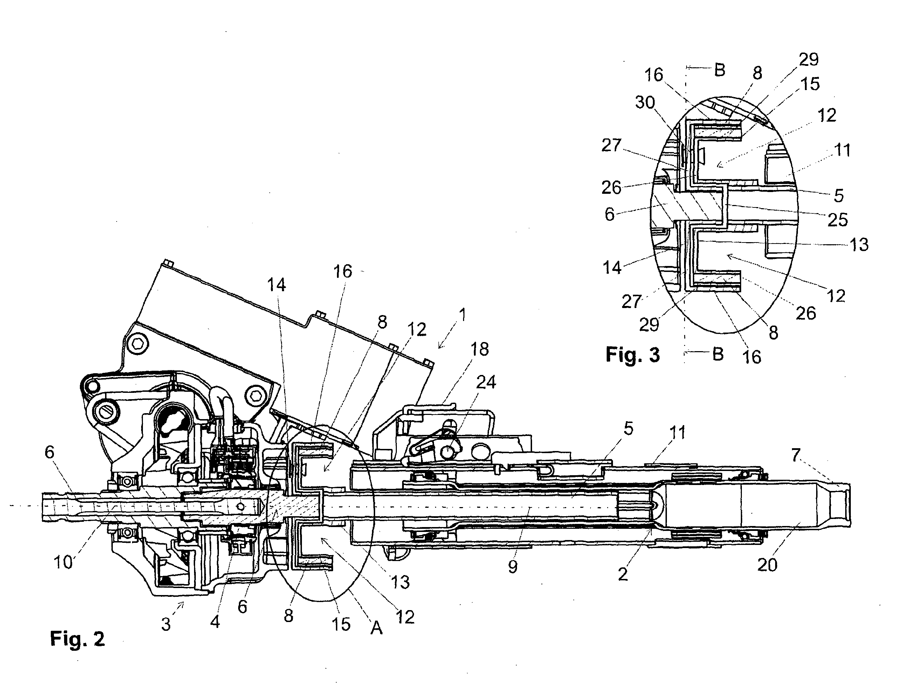

Fig. 1 zeigt zunächst ein schematisiertes Beispiel einer, von ihrem Grundaufbau her an sich bekannten Lenksäule 1 mit einer drehbar gelagerten mehrteilig aufgebauten Lenkspindel 2. Die Lenkspindel 2 dient der Übertragung der vom Lenker des Kraftfahrzeugs am Lenkrad 17 ausgeführten Lenkbewegungen auf das Lenkgetriebe 21. Mittels des Lenkgetriebes 21 wird die Drehbewegung der Lenkspindel 2 in eine Bewegung der Lenkstange 22 umgesetzt, wodurch das hier nur einzeln und stark schematisiert dargestellte Rad 23 des Fahrzeugs einen Lenkeinschlag ausführt. In Fig. 1 sind mehrere Lenkspindelteile 20 der Lenkspindel 2 zu sehen. Eines der Lenkspindelteile 20 weist den Lenkradanschluss 7 auf, an dem das Lenkrad 17 befestigt ist. Die zwischen der motorischen Lenkunterstützungseinrichtung 3 und dem Lenkgetriebe 21 angeordneten Lenkspindelteile 20 sind mittels Kardangelenken 19 miteinander verbunden. Die erfindungswesentlichen Lenkspindelteile 5 und 6, welche jeweils am Dämpfungskörper 8 angeordnet sind, sind in der stark schematisierten Darstellung gemäß Fig. 1 ebenso nicht zu sehen, wie die Manteleinheit 11, in der die Lenkspindel 2 drehbar gelagert ist. Diese Bauteile sind in Fig. 1 von der Trageinheit 18 verborgen. Letztere dient der Befestigung der Lenksäule 1 an der Karosserie des Fahrzeugs. Im Sinne der Möglichkeit einer Anpassung der Position des Lenkrades 17 an den jeweiligen Lenker kann die, die Lenkspindel 2 lagernde Manteleinheit 11 relativ zur Trageinheit 18 in Längsrichtung der Lenkspindel 2 und/oder in Vertikalrichtung verstellbar sein. Die hierzu notwendigen Verstell- und Klemmmechanismen sind beim Stand der Technik an sich bekannt und können bei Lenksäulen 1 gemäß der Erfindung eingesetzt werden. Bekannt sind auch die hier in Fig. 1 nur schematisiert dargestellten motorischen Lenkunterstützungseinrichtungen 3. Sie können, wie bereits ausgeführt, auch bei erfindungsgemäß ausgeführten Lenksäulen einer Lenkwinkelüberlagerung und/oder einer Drehmomentunterstützung dienen. Bei der Umsetzung der Erfindung kann auf an sich bekannte motorische also mit Hilfskraft-motor versehene Lenkunterstützungseinrichtungen 3 zurückgegriffen werden, sodass diese auch nicht weiter erläutert werden müssen. Der Vollständigkeit halber wird darauf hingewiesen, dass die gesamte, drehbar gelagerte, vom Lenkradanschluss 7 bis zum Lenkgetriebe 21 geführte, mehrteilig aufgebaute Welle als Lenkspindel 2 bezeichnet wird. In den gezeigten Ausführungsbeispielen ist die Lenkspindel 2 durch die Lenkunterstützungseinrichtung 3 hindurchgeführt. Ein in Fig. 1 nicht sichtbares Übertragungsglied 4 der Lenkunterstützungseinrichtung 3 wirkt auf das durch die Lenkunterstützungseinrichtung 3 hindurch geführte Lenkspindelteil 6 ein und überträgt so die von der Lenkunterstützungseinrichtung 3 erzeugte Lenkwinkelüberlagerung und/oder Drehmomentunterstützung auf das Lenkspindelteil 6 und damit auf die Lenkspindel 2. Dies wird weiter unten anhand der in den Fig. 2 bis 7 gezeigten Beispielen noch im Detail erläutert. Vorab wird aber noch darauf hingewiesen, dass sich die Kardangelenke 19 nicht ausschließlich zwischen der Lenkunterstützungseinrichtung 3 und Lenkgetriebe 21 befinden müssen. Es sind auch Ausführungsbeispiele der Erfindung denkbar, bei denen die Lenkspindel 2 im Bereich zwischen Lenkunterstützungseinrichtung 3 und Lenkradanschluss 7 ein oder mehrere Kardangelenke 19 aufweist.

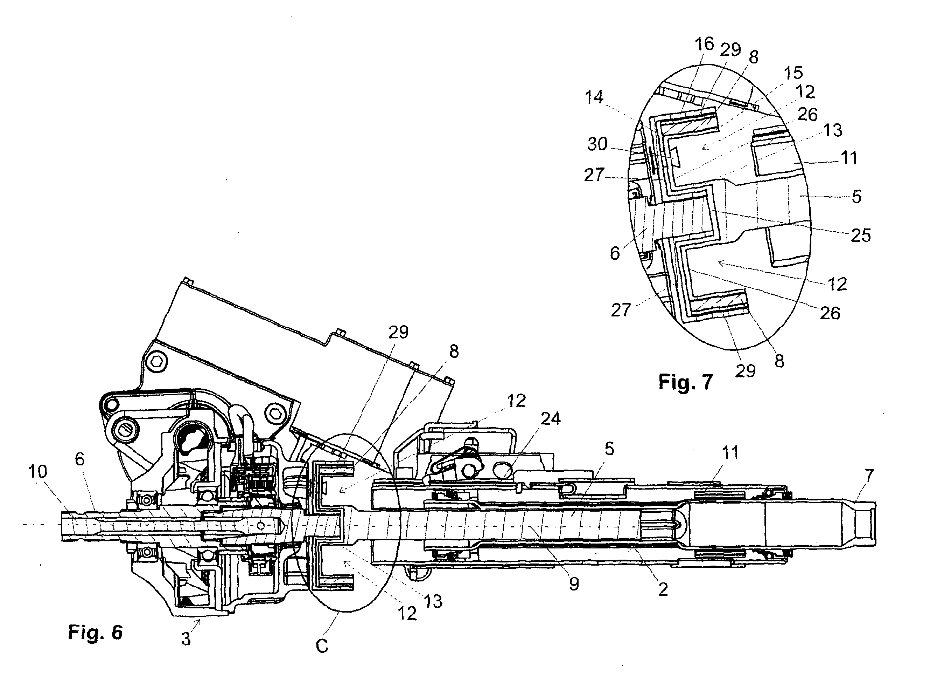

Fig. 2 zeigt einen Längsschnitt eines ersten Ausführungsbeispiels einer erfindungsgemäßen Lenksäule 1 im Bereich zwischen Lenkradanschluss 7 und Lenkunterstützungseinrichtung 3. Die hier nicht dargestellten Abschnitte der Lenksäule 1 zwischen Lenkunterstützungseinrichtung 3 und Lenkgetriebe 21 sind hier nicht erfindungswesentlich und können in der Detaildarstellung gemäß Fig. 2 und 6 weggelassen werden. Bezüglich dieser weggelassenen Teile wird auf den Stand der Technik und insbesondere auf Fig. 1 verwiesen.

Im Längsschnitt gemäß Fig. 2 sind drei Teile der Lenkspindel 2 zu sehen. Dies ist zunächst das Lenkspindelteil 20, welches den Lenkradanschluss 7 aufweist. Das Lenkspindelteil 20 ist mit dem Lenkspindelteil 5 in an sich bekannter Art und Weise teleskopierbar verbunden. Durch diese teleskopartige Verbindung der beiden genannten Lenkspindelteile 5 und 20 kann die Lenkspindel 2 im Fall eines Crashs entlang der Drehachse 9 des Lenkspindelteils 5 in ihrer Länge zusammengestaucht werden, sodass im Crashfall das Lenkrad 17 nicht zu weit in den Fahrgastraum vordringt. Die Lenkspindel 2 ist im Bereich der genannten Lenkspindelteile 5 und 20 um die Drehachse 9 drehbar in der Manteleinheit 11 gelagert. Die Manteleinheit 11 ist, wie gesagt, über einen hier nicht genauer dargestellten Klemm- und/oder Verstellmechanismus an der Trageinheit 18, vorzugsweise verstellbar, befestigt. Zwischen Manteleinheit 11 und Trageinheit 18 kann eine hier nur schematisiert dargestellte Energieabsorptionseinrichtung 24 vorgesehen sein. Solche Energieabsorptionseinrichtungen 24 sind beim Stand der Technik bekannt und müssen hier nicht weiter erläutert werden. Sie dienen dem kontrollierten Energieabbau im Crashfall, wenn die Manteleinheit 11 durch ein Aufprallen des Fahrzeuglenkers auf das Lenkrad 17 in Richtung hin zur Lenkunterstützungseinrichtung 3 verschoben wird.

Wie bereits eingangs erläutert, sieht die Erfindung, wie die in den Figuren gezeigten, vor, dass die Manteleinheit 11 bei dieser crashbedingten Verschiebebewegung und /oder auch bei einer Längsverstellung der Lenksäule 1 in einen, im weiter unten noch im Detail erläuterten Dämpfungskörper 8 ausgebildeten, Hohlraum 12 eintauchen bzw. eingeschoben werden kann. Hierdurch kann ein relativ großer Verschiebeweg für die Manteleinheit 11 zur Verfügung gestellt werden, ohne dass sich hieraus eine große Baulänge der gesamten Lenksäule 1 ergeben würde.

An das hier als Hohlwelle ausgebildete Lenkspindelteil 5 schließt unter der weiter unten im Detail noch erläuterten Zwischenschaltung des Dämpfungskörpers 8 das Lenkspindelteil 6 an, welches durch die Lenkunterstützungseinrichtung 3 hindurch geführt ist. Die Lenkunterstützungseinrichtung 3 kann wie beim Stand der Technik bekannt ausgeführt werden. Sie wirkt über das Übertragungsglied 4 auf das Lenkspindelteil 6 in an sich bekannter Art und Weise ein, um die Lenkwinkelüberlagerung und/oder die Drehmomentunterstützung durchzuführen. Als Antrieb für die Lenkunterstützungseinrichtung 3 weist diese einen Hilfskraftmotor auf. Hierbei kann es sich um einen elektrischen, hydraulischen, pneumatischen oder sonstigen Motor handeln. Allen diesen Motoren ist jedenfalls gemeinsam, dass die Gefahr besteht, dass bei ihrem Betrieb Vibrationen über das Übertragungsglied 4 auf die Lenkspindel 2 und damit auf das Lenkrad 17 übertragen werden. Dies gilt es, wie eingangs erläutert, zu vermeiden. Hierzu sind die Lenkspindelteile 5 und 6, im Bereich der Lenkspindel 2 zwischen dem Übertragungsglied 4 und dem Lenkradanschluss 7 der Lenkspindel 2, mittels zumindest eines Dämpfungskörpers 8 zur Dämpfung von über die Lenkspindel 2 übertragenen Vibrationen miteinander verbunden. Bevor die im Ausführungsbeispiel gemäß der Fig. 2 bis 5 realisierte Art der Verbindung im Übergangsbereich zwischen den Lenkspindelteilen 5 und 6 anhand des vergrößerten Ausschnitts A in Fig. 3 erläutert wird, sei noch darauf hingewiesen, dass in den dargestellten Ausführungsbeispielen die über den Dämpfungskörper 8 miteinander drehmomentübertragend verbundenen Lenkspindelteile 5 und 6 bezüglich ihrer Drehachsen 9 und 10, um die sie drehbar gelagert sind, koaxial zueinander angeordnet sind.

Wie besonders gut in der vergrößerten Darstellung gemäß Fig. 3 zu sehen, ist am Lenkspindelteil 5 ein topfartiger Verbindungsflansch 13 fixiert. Am Lenkspindelteil 6 ist ebenfalls ein topfartiger Verbindungsflansch 14 fixiert. Diese Verbindungsflansche 13 und 14 weisen jeweils Bodenflächen 26 und 27 auf, welche jeweils zylindermantelförmige Abschnitte 15 und 16 der Verbindungsflansche 13 und 14 tragen. Die in dieser Form topfartig ausgebildeten Verbindungsflansche 13 und 14 sind in der dargestellten Art und Weise ineinander angeordnet und stehen abgesehen vom Dämpfungskörper 8 zumindest im Normalbetrieb nicht im direkten physischen Kontakt miteinander. Hierdurch wird erreicht, dass die Lenkspindelteile 5 und 6 im Normalbetrieb der Lenksäule 1 ausschließlich über den Dämpfungskörper 8 miteinander verbunden sind. In der gezeigten Ausführungsform ist der Dämpfungskörper 8 auch der einzige Weg zur Drehmomentübertragung zwischen den Lenkspindelteilen 5 und 6. Abgesehen vom Dämpfungskörper 8 sind die Verbindungsflansche 13 und 14 und damit auch die Lenkspindelteile 5 und 6 über den Freiraum 25 voneinander getrennt.

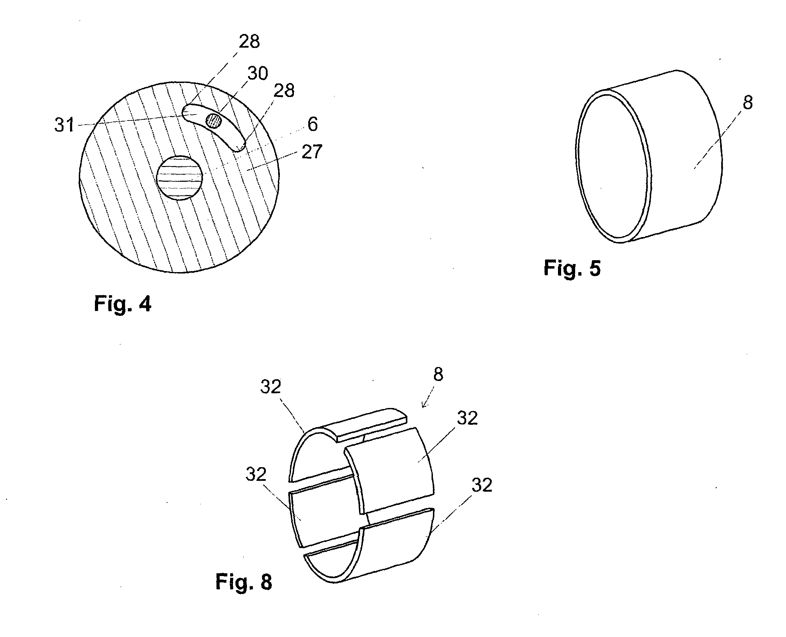

In den dargestellten Varianten ist der Dämpfungskörper 8, wie in Fig. 5 besonders gut zu sehen, als umlaufende in sich geschlossene Zylindermantelwand ausgebildet. Mit seiner zylindermantelförmigen Außenfläche ist der Dämpfungskörper 8 drehmomentübertragend am zylindermantelförmigen Abschnitt 16 des Verbindungsflansches 14 und damit am Lenkspindelteil 6 befestigt. Über seine zylindermantelförmige Innenfläche ist der Dämpfungskörper 8 drehmomentübertragend mit dem zylindermantelförmigen Abschnitt 15 des Verbindungsflansches 13 und damit mit dem Lenkspindelteil 5 verbunden. Wie im gezeigten Ausführungsbeispiel angedeutet, können zwischen dem Dämpfungskörper 8 und dem jeweils mit ihm verbundenen Teil der Lenkspindelteile 5 und 6 noch Zwischenschichten 29 angeordnet sein. Hierbei kann es sich um Haftvermittler, Blechhülsen, Klebeschichten und dergleichen handeln. Die Zwischenschichten 29 können sowohl zwischen Dämpfungskörper 8 und dem jeweils anschließenden Bauteil des Lenkspindelteils 5 als auch zwischen Dämpfungskörper 8 und dem jeweils anschließenden Bauteil des Lenkspindelteils 6 angeordnet sein. Zur Vibrationsdämpfung weist der Dämpfungskörper 8 günstigerweise zumindest ein Elastomer auf. Der Dämpfungskörper 8 kann auch vollständig aus Elastomer bestehen. Auch andere, zur Vibrationsdämpfung geeignete Materialien können als oder im Dämpfungskörper 8 vorgesehen sein. Zur Befestigung des Dämpfungskörpers 8 an den entsprechenden Bauteilen der Lenkspindelteile 5 und 6 können Klebeverbindungen, ein Aufvulkanisieren oder einfach ein Einpressen oder andere beim Stand der Technik an sich bekannte, geeignete Verbindungsarten vorgesehen sein. Günstig ist es jedenfalls, wenn der Dämpfungskörper 8 in radialer Richtung bezüglich der Drehachsen 9 und 10 über die benachbarten Bereiche der Lenkspindelteile 5 und 6 übersteht, da dann relativ große Drehmomente über den Dämpfungskörper 8 übertragen werden können. Neben der Drehmomentübertragung dient der Dämpfungskörper 8 aber wie gesagt hauptsächlich der Dämpfung von vom Hilfskraftmotor der Lenkunterstützungseinrichtung 3 erzeugten Vibrationen. Er verhindert, dass diese Vibrationen auf das Lenkspindelteil 5 und damit in Richtung Lenkradanschluss 7 übertragen werden können. Denkbar und möglich ist es, dass die mantelförmigen Abschnitte 15 und 16 der Verbindungsflansche 13 bzw. 14 nicht zylindrisch, sondern umlaufend polygonal, umlaufend wellenförmig geformt sind, wobei die Formen zueinander und zum Dämpfungskörper 8 korrespondierend sind. Auf diese Weise wird es möglich, ein hohes Drehmoment sicher zu übertragen, ohne auf die Verbindungsfestigkeit zwischen Dämpfungskörper 8 und mantelförmigen Abschnitt 15 und Abschnitt 16 zu Drehmomentübertragung angewiesen zu sein.

In einer alternativen Ausführungsform kann der Dämpfungskörper 8 auch mehrteilig und insbesondere in Umfangsrichtung durch mehrere einzelne Dämpfungselemente 32 gebildet sein, wie es in Fig. 8 veranschaulicht ist. Der Dämpfungskörper kann auch Aussparungen und/oder durchgehende Löcher enthalten.

In den gezeigten Ausführungsformen ist zusätzlich zu den bereits geschilderten Bauteilen ein Anschlagstift 30 vorgesehen. Es handelt sich hierbei um ein reines Sicherheitselement, welches dafür sorgt, dass beim Versagen der Verbindung zwischen Dämpfungskörper 8 und/oder dessen Verbindung zu den Lenkspindelteilen 5 und 6 trotzdem noch ein Notbetrieb des Lenkens des Fahrzeugs möglich ist. Im Normalbetrieb hat der Anschlagstift 30 keine Funktion und stellt auch keine Übertragungsbrücke für Vibrationen dar. Er kommt erst zum Einsatz, wenn Drehmomente zwischen den Lenkspindelteilen 5 und 6 auftreten, welche zu einem Bruch oder einem anderen Versagen der Verbindung der Lenkspindelteile 5 und 6 über den Dämpfungskörper 8 führen.

Fig. 4 zeigt einen Schnitt entlang der Schnittebene B-B durch die Bodenfläche 27 des Verbindungsflansches 14 des Lenkspindelteils 6. In diesem Schnitt ist zu sehen, dass sich in dieser Bodenfläche 27 ein bogenförmiges Langloch 31 befindet, welches von zwei Anschlägen 28 begrenzt ist. Der an der Bodenfläche 26 des Verbindungsflansches 13 des Lenkspindelteils 5 befestigte Anschlagstift 30 ist durch das Langloch 31 hindurchgeführt, steht aber mit der Bodenfläche 27 und damit mit dem Lenkspindelteil 6 im, in Fig. 4 dargestellten Normalbetrieb nirgends in direktem physischem Kontakt. Hierdurch wird vermieden, dass im Normalbetrieb Vibrationen vom Lenkspindelteil 6 über den Anschlagstift 30 auf das Lenkspindelteil 5 übertragen werden können.

Erst wenn die Drehmomentübertragung über den Dämpfungskörper 8 versagt und das Lenkspindelteil 5 und damit der Anschlagstift 30 relativ zum Lenkspindelteil 6 verdreht wird, kommt es ab einem, mittels der Länge des Langlochs 31 vorgegebenen Drehwinkel zum Anschlagen des Anschlagstiftes 30 an einem der Anschläge 28, wodurch ein Notbetrieb der Lenkung beim Versagen der Drehmomentübertragung über den Dämpfungskörper 8 sichergestellt ist. Der Anschlagstift 30 kann aus Metall oder einem geeigneten Kunststoff ausgeführt sein. Er kann mit einer vibrationsdämpfenden Ummantelung versehen sein oder aus einem solchen Material bestehen. Zur Vermeidung einer Vibrationsübertragung im Normalbetrieb können aber auch die in Fig. 4 dargestellten Freiräume zwischen Anschlagstift 30 und den das Langloch 31 begrenzenden Wandungen der Bodenfläche 27 ausreichen. Insbesondere für den Fall des Einsatzes eines mit einem Elastomer überzogenen oder aus Elastomer ausgebildeten Anschlagstiftes 30 kann unter Umständen ein physischer Kontakt zwischen dem Anschlagstift 30 und den Rändern des Langlochs 31 hingenommen werden. Auch kann der Stift selbst in der Bodenfläche 26 des Verbindungsflansches 13, in dem der Anschlagstift nicht in das bogenförmige Langloch 31 eingreift, mit einer elastomeren Aufnahme oder Vibrationen dämpfenden Aufnahme befestigt sein. Natürlich kann diese vom Anschlagstift 30 wahrgenommene Notfallfunktion auch anders realisiert werden. So ist es z.B. auch denkbar, das Langloch 31 in der Bodenfläche 26 des am Lenkspindelteil 5 angebrachten Verbindungsflansches 13 vorzusehen und den Anschlagstift 30 an der Bodenfläche 27 des Verbindungsflansches 14 des Lenkspindelteils 6 zu fixieren.

Denkbar und möglich ist es auch, in der Bodenfläche eines der Verbindungsflansche eine tiefe Einprägung oder auch eine Durchsetzung auszubilden, die die entsprechende Funktion als Anschlagstift 30 darstellt.

Die Fig. 6 und 7 zeigen ein zweites erfindungsgemäßes Ausführungsbeispiel, welches zum Großteil identisch mit dem ersten Ausführungsbeispiel gemäß der Fig. 2 bis 5 ausgeführt ist. Es wird hier somit nur noch auf die Unterschiede eingegangen. Diese bestehen im Wesentlichen darin, dass im zweiten Ausführungsbeispiel das Lenkspindelteil 5 nicht als Hohlwelle sondern als eine massive Stange ausgebildet ist. Weiters ist in diesem zweiten Ausführungsbeispiel der Verbindungsflansch 13 einstückig am Lenkspindelteil 5 ausgebildet, während es sich beim ersten Ausführungsbeispiel gemäß der Fig. 2 bis 5 beim Verbindungsflansch 13 um ein zunächst separates Teil handelt, welches am Lenkspindelteil 5 fixiert ist.

**Legende**

| zu den Hinweisziffern: | | | |
|---|---|---|---|
| 1 | Lenksäule | 16 | zylindermantelförmiger Abschnitt |
| 2 | Lenkspindel | | |
| 3 | Lenkunterstützungseinrichtung | 17 | Lenkrad |
| | | 18 | Trageinheit |
| 4 | Übertragungsglied | 19 | Kardangelenk |
| 5 | Lenkspindelteil | 20 | weitere Lenkspindelteile |
| 6 | Lenkspindelteil | 21 | Lenkgetriebe |
| 7 | Lenkradanschluss | 22 | Lenkstange |
| 8 | Dämpfungskörper | 23 | Rad |
| 9 | Drehachse | 24 | Energieabsorptionseinrichtung |
| 10 | Drehachse | 25 | Freiraum |
| 11 | Manteleinheit | 26 | Bodenfläche |
| 12 | Hohlraum | 27 | Bodenfläche |
| 13 | Verbindungsflansch | 28 | Anschlag |
| 14 | Verbindungsflansch | 29 | Zwischenschicht |
| 15 | zylindermantelförmiger Abschnitt | 30 | Anschlagstift |
| | | 31 | Langloch |
| | | 32 | Dämpfungselement |

## Patentansprüche

1. Lenksäule (1) für ein Kraftfahrzeug mit einer drehbar gelagerten Lenkspindel (2) und einer motorischen Lenkunterstützungseinrichtung (3) zur Lenkwinkelüberlagerung und/oder Drehmomentunterstützung, wobei die Lenkunterstützungseinrichtung (3) mittels zumindest eines Übertragungsgliedes (4) mit der Lenkspindel (2) verbunden ist und die Lenkspindel (2) zumindest zwei drehmomentübertragend miteinander verbundene Lenkspindelteile (5, 6) aufweist, wobei die Lenkspindelteile (5, 6), in einem Bereich der Lenkspindel (2) zwischen dem Übertragungsglied (4) und einem Lenkradanschluss (7) der Lenkspindel (2), mittels zumindest eines Dämpfungskörpers (8) zur Dämpfung von über die Lenkspindel (2) übertragenen Vibrationen miteinander verbunden sind, **dadurch gekennzeichnet, dass** zumindest eines der Lenkspindelteile (5, 6) in einer Manteleinheit (11) der Lenksäule (1) drehbar gelagert ist und im Dämpfungskörper (8) ein Hohlraum (12) ausgebildet ist, in den die Manteleinheit (11), bei einer crashbedingten Verformung und/oder Verschiebung innerhalb der Lenksäule (1), einschiebbar ist.

2. Lenksäule (1) nach Anspruch 1, **dadurch gekennzeichnet, dass** die Lenkspindelteile (5, 6) zumindest im Normalbetrieb der Lenksäule (1) ausschließlich über den Dämpfungskörper (8), vorzugsweise drehmomentübertragend, miteinander verbunden sind.

3. Lenksäule (1) nach Anspruch 1 oder 2, **dadurch gekennzeichnet, dass** der Dämpfungskörper (8) zumindest im Normalbetrieb der Lenksäule (1) einerseits drehmomentübertragend mit einem der Lenkspindelteile (5) und andererseits drehmomentübertragend mit einem anderen der Lenkspindelteile (6) verbunden ist.

4. Lenksäule (1) nach einem der Ansprüche 1 bis 3, **dadurch gekennzeichnet, dass** die Lenkspindelteile (5, 6) mit ihren Drehachsen (9, 10), um die sie drehbar sind, zumindest in ihren an den Dämpfungskörper (8) angrenzenden Bereichen koaxial zu einander angeordnet sind.

5. Lenksäule (1) nach einem der Ansprüche 1 bis 4, **dadurch gekennzeichnet, dass** der Dämpfungskörper (8) zumindest ein Elastomer aufweist oder daraus besteht.

6. Lenksäule (1) nach einem der Ansprüche 1 bis 5, **dadurch gekennzeichnet, dass** der Dämpfungskörper (8) als umlaufend in sich geschlossene Zylindermantelwand ausgebildet ist.

7. Lenksäule (1) nach einem der Ansprüche 1 bis 6, **dadurch gekennzeichnet, dass** zumindest eines der Lenkspindelteile (5, 6), vorzugsweise beide Lenkspindelteile (5, 6), einen topfartig ausgebildeten Verbindungsflansch (13, 14) aufweist bzw. aufweisen, wobei der Dämpfungskörper (8), vorzugsweise jeweils, an dem bzw. den topfartigen Verbindungsf lansch(en) (13, 14) befestigt ist.

8. Lenksäule (1) nach einem der Ansprüche 1 bis 7, **dadurch gekennzeichnet, dass** die mittels Dämpfungskörper (8) miteinander verbundenen Lenkspindelteile (5, 6) jeweils einen topfartigen Verbindungsflansch (13, 14) aufweisen und der Dämpfungskörper (8) zwischen den topfartigen Verbindungsflanschen (13, 14), vorzugsweise zwischen zylindermantelförmigen Abschnitten (15, 16) der topfartigen Verbindungsflansche (13, 14), angeordnet ist.

## Claims

1. A steering column (1) for a motor vehicle, having a rotatably mounted steering spindle (2) and a motor-operated steering boost device (3) for steering angle superimposition and/or torque boost, wherein the steering boost device (3) is connected to the steering spindle (2) by means of at least one transmission member (4) and the steering spindle (2) has at least two steering spindle parts (5, 6) connected to one another in a torque-transmitting manner, wherein the steering spindle parts (5, 6) are, in a region of the steering spindle (2) between the transmission member (4) and a steering wheel connection (7) of the steering spindle (2), connected to one another by means of at least one damping body (8) for damping vibrations transmitted via the steering spindle (2), **characterized in that** at least one of the steering spindle parts (5,6) is rotatably mounted in a casing unit (11) of the steering column (1) and in the damping body (8) there is formed a cavity (12) into which the casing unit (11) can be pushed in the case of a deformation and/or displacement within the steering column (1) due to a crash.

2. A steering column (1) according to claim 1, **characterized in that** at least in the normal operation of the steering column (1), the steering spindle parts (5, 6) are connected to one another, preferably in a torque-transmitting manner, solely via the damping body (8).

3. A steering column (1) according to claim 1 or 2, **characterized in that** at least in the normal operation of the steering column (1), the damping body (8) is connected on the one hand to one of the steering spindle parts (5) in a torque-transmitting manner and on the other hand to another of the steering spindle parts (6) in a torque-transmitting manner.

4. A steering column (1) according to any one of claims 1 to 3, **characterized in that** at least in their regions adjoining the damping body (8), the steering spindle parts (5, 6) are arranged coaxial with one another with their rotational axes (9, 10), about which they are rotatable.

5. A steering column (1) according to any one of claims 1 to 4, **characterized in that** the damping body (8) has or is made of at least one elastomer.

6. A steering column (1) according to any one of claims 1 to 5, **characterized in that** the damping body (8) is formed as a cylindrical casing wall which is closed in itself in an encircling manner.

7. A steering column (1) according to any one of claims 1 to 6, **characterized in that** at least one of the steering spindle parts (5, 6), preferably both steering spindle parts (5, 6), has or have a potlike connecting flange (13, 14), wherein the damping body (8) is, preferably in each case, secured to the pot-like connecting flange(s) (13, 14).

8. A steering column (1) according to any one of claims 1 to 7, **characterized in that** the steering spindle parts (5, 6) connected to one another by means of damping body (8) each have a potlike connecting flange (13, 14) and the damping body (8) is arranged between the pot-like connecting flanges (13, 14), preferably between cylindrical-casing-shaped portions (15, 16) of the pot-like connecting flanges (13, 14).

## Revendications

1. Colonne de direction (1) pour un véhicule automobile comprenant un arbre de direction (2) monté de manière à pouvoir tourner et un dispositif d'assistance à la direction (3) motorisé servant à superposer l'angle de braquage et/ou à soutenir le couple de rotation, le dispositif d'assistance à la direction (3) étant relié, au moyen au moins d'un organe de transmission (4), à l'arbre de direction (2) et l'arbre de direction (2) présentant au moins deux parties d'arbre de direction (5, 6) reliées entre elles de manière à transmettre un couple de rotation, les parties d'arbre de direction (5, 6) étant reliées entre elles dans une zone de l'arbre de direction (2) entre l'organe de transmission (4) et un raccordement de volant (7) de l'arbre de direction (2) au moyen au moins d'un corps d'amortissement (8) servant à amortir des vibrations transmises par l'intermédiaire de l'arbre de direction (2), **caractérisée en ce qu'**au moins une des parties d'arbre de direction (5, 6) est montée de manière à pouvoir tourner dans une unité enveloppante (11) de la colonne de direction (1), et **en ce qu'**un espace creux (12) est réalisé dans le corps d'amortissement (8), dans lequel l'unité enveloppante (11) peut être insérée par glissement à l'intérieur de la colonne de direction (1) dans le cas d'une déformation et/ou d'un déplacement par coulissement, lié(e) à une collusion.

2. Colonne de direction (1) selon la revendication 1, **caractérisée en ce que** les parties d'arbre de direction (5, 6) sont reliées entre elles au moins lors du fonctionnement normal de la colonne de direction (1) exclusivement par l'intermédiaire du corps d'amortissement (8), de préférence de manière à transmettre un couple de rotation.

3. Colonne de direction (1) selon la revendication 1 ou 2, **caractérisée en ce que** le corps d'amortissement (8) est relié au moins lors du fonctionnement normal de la colonne de direction (1) d'une part à une des parties d'arbre de direction (5) de manière à transmettre un couple de rotation et d'autre part à l'autre partie d'arbre de direction (6) de manière à transmettre le couple de rotation.

4. Colonne de direction (1) selon l'une quelconque des revendications 1 à 3, **caractérisée en ce que** les parties d'arbre de direction (5, 6) sont disposées par leurs axes de rotation (9, 10), autour desquels elles peuvent tourner, de manière coaxiale l'une par rapport à l'autre au moins dans leurs zones jouxtant le corps d'amortissement (8).

5. Colonne de direction (1) selon l'une quelconque des revendications 1 à 4, **caractérisée en ce que** le corps d'amortissement (8) présente au moins un élastomère ou est constitué d'au moins un élastomère.

6. Colonne de direction (1) selon l'une quelconque des revendications 1 à 5, **caractérisée en ce que** le corps d'amortissement (8) est réalisé sous la forme d'une paroi enveloppante cylindrique fermée périphériquement.

7. Colonne de direction (1) selon l'une quelconque des revendications 1 à 6, **caractérisée en ce qu'**au moins une des parties d'arbre de direction (5, 6), de préférence les deux parties d'arbre de direction (5, 6), présente ou présentent une bride d'assemblage (13, 14) réalisée à la manière d'un pot, le corps d'amortissement (8) étant fixé de préférence respectivement au niveau de la ou des brides d'assemblage (13, 14) réalisées à la manière d'un pot.

8. Colonne de direction (1) selon l'une quelconque des revendications 1 à 7, **caractérisée en ce que** les parties d'arbre de direction (5, 6) reliées entre elles au moyen du corps d'amortissement (8) présentent respectivement une bride d'assemblage (13, 14) réalisée à la manière d'un pot, et **en ce que** le corps d'amortissement (8) est disposé entre les brides d'assemblage (13, 14) réalisées à la manière d'un pot, de préférence entre des sections (15, 16) présentant une forme d'enveloppe cylindrique de la bride d'assemblage (13, 14) réalisée à la manière d'un pot.
